# EUROPEAN PATENT SPECIFICATION

(11) **EP 0 465 983 B1**
(45) Date of publication and mention of the grant of the patent: **04.10.1995**
(21) Application number: 91110895.9
(22) Date of filing: 01.07.1991
(51) Int. Cl.: F16B 5/06, F16B 5/07, F16B 21/08

(54) **Surface fastener for fastening platelike article**
Flächenhaftverschluss zur Befestigung eines plattenförmigen Gegenstandes
Attache du type à fermeture de surface pour fixer un article en forme de plaque

(30) Priority: 03.07.1990 JP 70988/90 U
(43) Date of publication of application: 15.01.1992
(73) Proprietor: YKK CORPORATION, Chiyoda-ku, Tokyo (JP)
(72) Inventor: Murasaki, Ryuichi, Nakaniikawa-gun, Toyama-ken (JP)
(74) Representative: Patentanwälte Leinweber & Zimmermann

(56) References cited:
- FR-A- 2 239 609
- GB-A- 1 209 413

## Description

### BACKGROUND OF THE INVENTION

### 1. Field of the Invention:

This invention relates to a surface fastener for fastening a plate-like article, comprising:
(a) a first surface fastener member having some rigidity and including (i) a first flat base, (ii) a plurality of first intermeshing elements extending from a surface of said first flat base, (iii) a projection extending from the other surface of said first flat base, being adapted to be inserted through an opening formed on a mounting base;
(b) a companion second surface fastener member including (i) a second flat base, and (ii) second intermeshing elements extending from said second flat base and being adapted to grip with said first intermeshing elements of said first surface fastener member so as to attach the plate-like article to the mounting base.

### 2. Description of the Related Art:

Recently a variety of interior finish materials have been installed on a mounting base such as a ceiling, floor or door panel of an automobile by using surface fasteners. For this purpose, mating surface fastener members are attached respectively to a surface of the mounting base and a surface of the interior finish material to be installed on the mounting base. The interior finish material is pressed and is then fastened to the mounting base by means of the surface fastener.

The mating surface fastener members are attached on the corresponding surfaces by ultrasonic welding or pressure adhesion, for example. Such method is some-what disadvantageous due to durability or fastening strength of the fastened surfaces. There have been proposed a number of methods, in which the surface fastener member is fixed on the mounting base by using an elastic double hook projecting from the rear surface of a base plate of the surface fastener member. The elastic double hook is resiliently inserted into an opening formed on the mounting base. Then the opposite surfaces of the mounting base are firmly supported by the double hook and the surface fastener member.

These prior methods are exemplified in Japanese Patent Publication No. 651/1976, Japanese Utility Model Publication No. 26089/1979, and Japanese Utility Model Laid-Open Publication No. 31250/1982. It is understood that the surface fasteners are widely employed for installing the interior finish materials not only in automobiles but also in houses and buildings.

These interior finish materials are very diverse in their configurations and materials. A few of them are flat, while many of them have curved surfaces. Specifically, it is impossible to install an article having a bulging surface on a mounting base. To install an article having a curved surface, the article is fastened at its concave portions to the mounting base by using the surface fasteners.

The base plate of the surface fastener member to be attached to the mounting base is usually flat and somewhat rigid as described in the foregoing Japanese patent and utility model publications. Therefore, when a surface fastener member is curved according to the configuration of a concave article attached there-on at the apex of the concavity and is intermeshed with the flat surface fastener member which has been attached to the mounting base such as a ceiling reinforcement in an automobile, the surface fastener members engage with each other only partially. In such a case, the surface fastener cannot demonstrate sufficiently its main feature that the fastener members grip with each other on their entire regions. In addition, the article cannot be attached to the mounting base with sufficient firmness.

A surface fastener of the type mentioned at the beginning of this specification is disclosed in GB-A1 209 413. With this conventional surface fastener there are arranged at said other side of the first flat base two wedge-shaped ribs which extend along two opposite edges thereof. These two parallel ribs are being inserted into two slots of the mounting base. This known surface fastener is suited only for fastening a plane plate-like object. If the plate-like object would be curved it would abut the first flat base only with a part of its surface so that the connection between these two parts would have an insufficient rigidity.

FR-A-2 239 609 discloses a fastener member for connecting a pair of parallel panels or plates. This prior art fastener member comprises a flat base and a projection extending centrally from a surface of said flat base and a pair of ribs in the shape of blocks disposed at opposite side edges of said flat base, said central projection having an elastic double hook and being adapted to be inserted through an opening formed on one of the panels. Because of the resilience of the flat base and of the double hook, the fastener member is adapted to compensate for tolerances of the thickness of the said panel so that it remains in a gripped state if once applied in order to reduce sounds and vibrations.

### SUMMARY OF THE INVENTION

It is therefore an object of this invention to provide a surface fastener, for fastening a platelike article, in which even if a surface fastener member to be installed on the mounting base is flat and somewhat rigid, it can be deformed resiliently according to the configuration of a companion surface fastener member on which an article having a curved surface is attached, thereby enabling the article to be fastened to the mounting base via the surface fastener members which engage with each other completely.

According to this invention, a surface fastener of the type mentioned above satisfying this requirement is characterized in that said projection extends centrally from said other surface of said first flat base, that said central projection has an elastic double hook and that at least a pair of ribs of the shape of blocks are disposed with a predetermined space around the peripheral edge of said first flat base.

When the elastic double hook is inserted into the opening formed in the mounting base, the surface fastener member is fixed firmly to the mounting base by the elastic double hook and the ribs which are formed on the base plate of the surface fastener member. Under this condition, since the base plate remains flat, a clearance corresponding to the height of the ribs is defined between the mounting base and the base plate.

When the companion surface fastener member curved by an article to be carried thereon is pressed against the flat surface fastener member on the mounting base, the base plate of the first-mentioned surface fastener member is resiliently deformed by the ribs as supports so as to agree with the configuration of the companion surface fastener member, thereby enabling the article to be firmly fixed to the mounting base by the surface fastener members which intermesh with each other completely.

Under the above condition, the projection of the base plate is pushed upwardly in the opening of the mounting base according to the deformation of the base plate. Further, the elastic double hook of the projection is also deformed resiliently according to the upward movement of the projection, being in complete contact with the mounting base.

When the article is flat, both of the surface fastener members remain flat, entirely intermeshing with each other as usual.

The above and other advantages, features and additional objects of this invention will be manifest to those versed in the art upon making reference to the drawings in which several preferred embodiments incorporating the principles of this invention are shown by way of illustrative examples.

### BRIEF DESCRIPTION OF THE DRAWINGS

FIG. 1 is a perspective view showing a surface fastener, for fastening a platelike article, according to one embodiment of this invention;
FIG. 2 is a side elevational view, partially in cross section, showing the manner in which a flat article is fastened to a mounting base by means of a surface fastener;
FIG. 3 is a side elevational view, partially in cross section, showing the manner in which a curved article is fastened to the mounting base by means of the surface fastener; and
FIGS. 4 and 5 are plan views showing modified arrangements of ribs.

### DETAILED DESCRIPTION

Various embodiments of this invention will now be described with reference to the accompanying drawings.

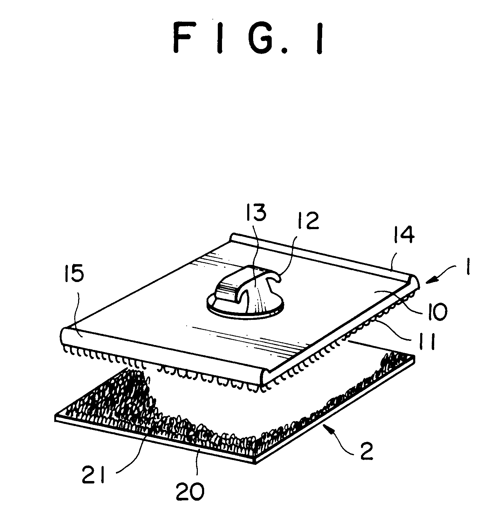

FIG. 1 is a perspective view of a surface fastener for fastening an interior finish material in an automobile. In FIG. 1, reference numeral 1 stands for a square surface fastener member to be attached to a mounting base of an automobile (hereinafter referred to as a mounting-base fastener member), and 2 stands for a companion surface fastener member for attaching an interior finish material (hereinafter referred to as an interior-material fastener member) thereon.

Both the mounting-base fastener member 1 and the interior-material fastener member 2 include flat base plates 10, 20, which are usually made of synthetic resin or may be metal.

The base plate 10 of the mounting-base fastener member 1 has a surface of tiny hooks 11 bristling thereon and reinforcing ribs 11', at standing portions of the hooks 11. The other surface of the base plate 10 has a pillar-like projection 13 and a double hook 12 extending from the projection 13. The projection 13 has a circular bottom. A pair of ribs 14, 15 is formed on opposite side edges of the mounting-base fastener member 1 in parallel to the double hook 12. The base plate 10, tiny hooks 11, double hook 12, projection 13 and the ribs 14, 15 are all formed integrally by injection molding.

The interior-material fastener member 2 is shaped substantially identical to the mounting-base fastener member 1 and has a clinging pile 21 on its one surface by a usual method.

The mounting-base fastener member 1 and the interior-material fastener member 2 jointly serve as a surface fastener. When the tiny hooks 11 and the clinging pile 21 are pressed against each other, both the fastener members 1 and 2 can be intermeshed completely.

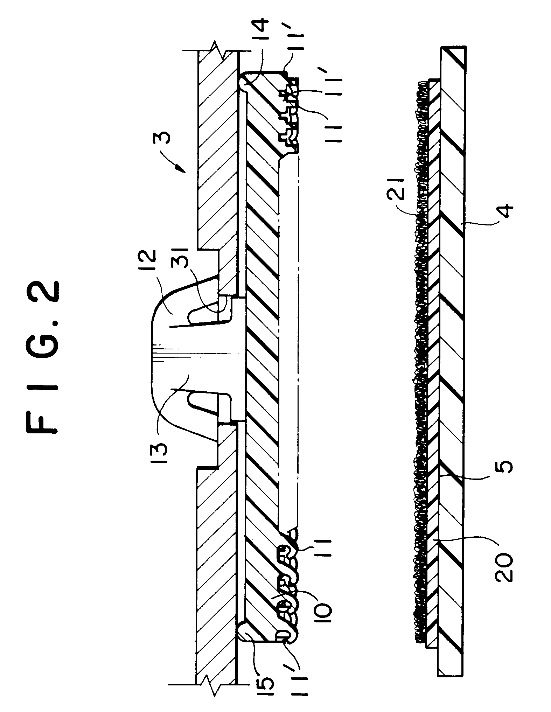

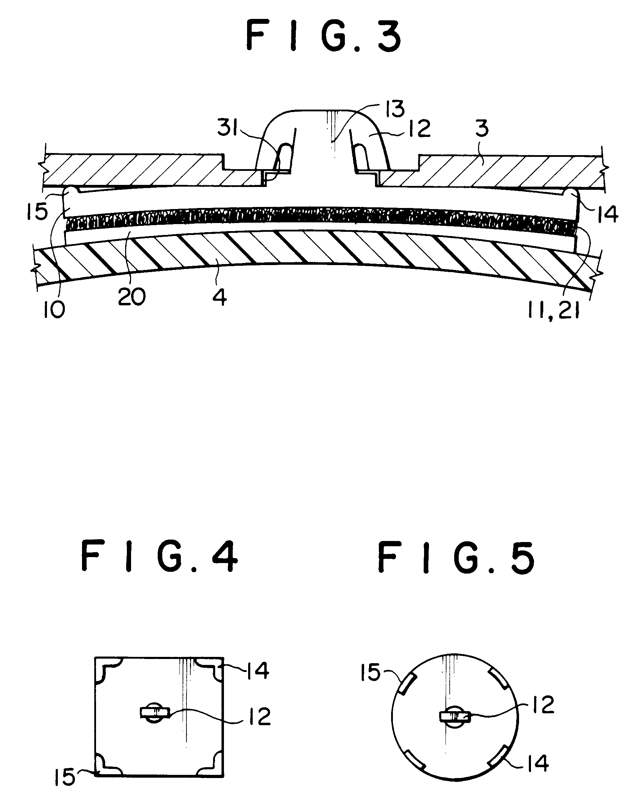

FIGS. 2 and 3 show the manner in which the foregoing fastener members are applied to install an interior finish material on a ceiling or a door panel of an automobile, for example.

In FIGS. 2 and 3, reference numeral 3 stands for a mounting base such as a ceiling reinforcement or a door panel, and 4 stands for a platelike interior finish material such as a mat or cushion.

A rear surface of the interior-material fastener member 2 is attached to a rear surface of the interior finish material 4 by an anchorage 5 such as an adhesive or a tacky adhesive. In other words, the clinging pile 21 of the fastener member 2 and the front surface of the interior finish material 4 face outwardly.

The double hook 12 of the mounting-base fastener member 1 is inserted through a circular opening 31 of the mounting base 3, being compressed. Then, the circular bottom of the projection 13 is fitted in the opening 31, causing the tips of the double hook 12 to resiliently expand on the upper surface of the mounting base 3 to press the mounting base 3. Under this condition, the ribs 14, 15 on the opposite side edges of the base plate 10 are in contact with the lower surface of the mounting base 3. Then the mounting-base fastener member 1 is firmly fixed to the mounting base 3 by the double hook 12 and the ribs 14, 15.

Then the clinging pile 21 of the interior-material fastener member 2 attached to the interior finish material 4 is pressed against the tiny hooks 11 on the mounting-base fastener member 1, thereby enabling the fastener members 1, 2 to intermesh with each other firmly and completely. Thus the interior finish material 4 has been attached to the mounting base 3 via the fastener members 1, 2.

FIG. 2 shows an example in which both an interior finish material and a mounting-base fastener member are flat. In this case, the tiny hooks 11 and the clinging pile 21 of the fastener members are gripped each other with improved firmness.

FIG. 3 shows an example in which an interior finish material 4 has a curved surface. In this case, the fastener member 2 is attached to an apex of a convex rear surface of the interior finish material 4. When the clinging pile 21 of the fastener member 2 is pressed against the tiny hooks 11 of the mounting-base fastener member 1, the base plate 10 of the mounting-base fastener member 1 is supported by the ribs 14, 15, being deformed according to the configuration of the interior finish material 4. At the same time, the projection 13 of the mounting-base fastener member 1 slides upwardly through the opening 31 of the mounting base 3. The elastic double hook 12 of the projection 13 (FIG. 2 shows the double hook 12 having widened from their original shape to some extent) presses elastically the mounting base 3 around the opening 31. Under the condition of FIG. 3, the double hook 12 keeps on resiliently pressing the mounting base 3 so as to hold it firmly.

The interior finish material 4 having a curved surface can be attached firmly to the mounting base 3 by the mounting-base fastener member 1 and the interior-material fastener member 2, which intermesh with each other completely.

In the foregoing embodiment, the mounting-base fastener member 1 has the tiny hooks 11 while the interior-material fastener member 2 has the clinging pile 21. The arrangement of the tiny hooks 11 and the clinging pile 21 may be reversed. Further, the hook and pile members 11 and 21 may be in the shape of mushroom, or one of them may be in the shape of mushroom while the other may be in the shape of loops.

The elastic double hook 12 on the base plate 10 of the fastener member 1 may be of any shape. A plurality of hooks may be arranged radially.

It is not always essential that the base plates 10 of the fastener members 1, 2 are square. They may be circular or polygonal, if desired. As shown in FIGS. 4 and 5, when the base plates are square or circular, ribs 14, 15 may be in the shape of blocks with a predetermined space around the peripheral edge of the base plates. When the base plate is triangular, the ribs 14, 15 should be located at apexes of the triangle.

The surface fastener according to this invention is also applicable not only to flat surfaces but also spherical surfaces. In addition, the base plates may be provided with opening or grooves so as to make it more flexible.

According to this invention, the mounting-base fastener member attached to the mounting base is deformed according to the configuration of the interior finish material to be fastened to the mounting base. Therefore even if the interior finish material has a curved surface, it can be attached firmly to the flat mounting base by means of the surface fastener members which intermesh with each other completely.

## Claims

1. A surface fastener for fastening a plate-like article (4), comprising:
(a) a first surface fastener member (1) having some rigidity and including (i) a first flat base (10); (ii) a plurality of first intermeshing elements (11) extending from a surface of said first flat base (10), (iii) a projection (13) extending from the other surface of said first flat base (10), being adapted to be inserted through an opening formed on a mounting base (3);
(b) a companion second surface fastener member (2) including (i) a second flat base (20), and (ii) second inter-meshing elements (21) extending from said second flat base (20) and being adapted to grip with said first intermeshing elements (11) of said first surface fastener member (1) so as to attach the plate-like article (4) to the mounting base (3),
*characterized in that* said projection (13) extends centrally from said other surface of said first flat base (10), that said central projection (13) has an elastic double hook (12) and that at least a pair of ribs (14, 15) of the shape of blocks are disposed with a predetermined space around the peripheral edge of said first flat base (10).

## Patentansprüche

1. Flächenhaftverschluß zum Befestigen eines plattenartigen Gegenstandes (4), umfassend:
(a) ein erstes Flächenhaftverschlußteil (1), das eine gewisse Steifigkeit aufweist und (i) eine erste ebene Basis (10); (ii) eine Vielzahl erster Eingriffselemente (11), die von einer Seite der ersten ebenen Basis (10) abstehen, (iii) einen Vorsprung (13) aufweist, der von der anderen Seite der ersten ebenen Basis (10) absteht und in eine in einer Befestigungsbasis (3) ausgebildete Öffnung einsetzbar ist;
(b) ein zugehöriges zweites Flächenhaftverschlußteil (2), das (i) eine zweite ebene Basis (20) und (ii) zweite Eingriffselemente (21) aufweist, die von der zweiten ebenen Basis (20) abstehen und mit den ersten Eingriffselementen (11) des ersten Flächenhaftverschlußteils (1) in Eingriff bringbar sind, um den plattenartigen Gegenstand (4) an der Befestigungsbasis (3) anzubringen,
dadurch **gekennzeichnet**, daß der Vorsprung (13) von der besagten anderen Seite der ersten ebenen Basis (10) mittig absteht, daß dieser mittige Vorsprung (13) einen elastischen Doppelhaken (12) hat und daß mindestens zwei blockförmige Rippen (14, 15) mit einem bestimmten Zwischenraum um den Umfangsrand der ersten ebenen Basis (10) herum angeordnet sind.

## Revendications

1. Attache à auto-agrippement pour fixer un article (4) analogue à une plaque, comprenant :
(a) un premier élément d'attache (1) à auto-agrippement présentant une certaine rigidité et comprenant: (i) une première base plate (10); (ii) une pluralité de premiers éléments (11) d'accrochage réciproque s étendant depuis une surface de ladite première base plate (10); (iii) une saillie (13) s'étendant depuis l'autre surface de ladite première base plate (10) et étant adaptée pour être insérée dans une ouverture formée dans une base de montage (3);
(b) un second élément d'attache associé (2) à auto-agrippement comprenant (i) une seconde base plate (20) et (ii) des seconds éléments (21) d'accrochage réciproque, s'étendant depuis la seconde base plate (20) et étant adaptés pour s'accrocher avec lesdits premiers éléments (11) d'accrochage réciproque dudit premier élément d'attache (1) à auto-agrippement, de manière à attacher l'article (4) analogue à une plaque à la base de montage (3);
caractérisée en ce que ladite saillie (13) s'étend centralement depuis ladite autre surface de ladite première base plate (10), que ladite saillie centrale (13) comporte un crochet élastique double (12) et qu'au moins une paire de nervures (14, 15) en forme de blocs sont disposées avec un espace prédéterminé autour du bord périphérique de ladite base plate (10).
